# EUROPÄISCHE PATENTSCHRIFT

(11) **EP 2 693 054 B1**
(45) Veröffentlichungstag und Bekanntmachung des Hinweises auf die Patenterteilung: **11.03.2015**
(21) Anmeldenummer: 13177288.1
(22) Anmeldetag: 19.07.2013
(51) Int. Cl.: F04B 49/00, F04B 49/10

(54) **Steuervorrichtung für hydrostatische Antriebe**
Control device for hydrostatic drives
Dispositif de commande pour entraînements hydrostatiques

(30) Priorität: 01.08.2012 DE 102012213585
(43) Veröffentlichungstag der Anmeldung: 05.02.2014
(73) Patentinhaber: Danfoss Power Solutions GmbH & Co. OHG, 24539 Neumünster (DE)
(72) Erfinder: Thoms, Reinhardt, 24361 Holzbunge (DE)
(74) Vertreter: Erhardt, Martin

(56) Entgegenhaltungen:
- EP-A2- 0 477 510
- DE-A1- 3 227 423
- DE-A1- 10 225 691

## Beschreibung

Die Erfindung betrifft hydrostatische Antriebe mit einem geschlossenen Hydraulikkreislauf, in dem zumindest ein Hydraulikmotor und eine Verstellpumpe angeordnet sind. Die Erfindung betrifft insbesondere eine Steuervorrichtung für die gesteuerte Beaufschlagung einer zweiseitigen Servoverstelleinheit für eine im geschlossenen Hydraulikkreislauf angeordnete Verstellpumpe. Die Servoverstelleinheit der Verstellpumpe ist bevorzugt zweiseitig, wobei die Verstellpumpe bevorzugt reversibel ist, was jedoch für die Erfüllung des Erfindungsgedankens nicht erforderlich ist, da der Erfindungsgedanke auch mit einseitig verstellbaren Hydraulikpumpen verwirklichbar ist. Vom Erfindungsgedanken sind alle Arten von Hydraulikmotoren und -pumpen umfasst, insbesondere solche in Axialkolben- und Radialkolben-Bauart. Hierbei sind Konstantmotoren, verstellbare Motoren sowie reversible Motoren in Axialkolben- oder in Radialkolben-Bauart umfasst, jedoch ist der Erfindungsgedanke auf alle hydrostatisch arbeitenden Maschinen übertragbar. Im weiteren Sinne umfasst die Erfindung auch hydrostatische Linear-Antriebe, sofern diese in einen geschlossenen Hydraulikkreis eingebunden sind.

Hydrostatische Antriebe mit einem geschlossenen Hydraulikkreis sind aus dem Stand der Technik bekannt. So werden hydrostatische Antriebe für viele Arten von Antrieben in mobilen und statisch aufgestellten Maschinen verwendet. Dabei finden hydrostatische Antriebe als Fahrantrieb für Fahrzeuge und/oder als Nebenantriebe, wie z. B. Lüfter, Generatoren, Kühlaggregaten oder dergleichen Verwendung. Vom Erfindungsgedanken sind alle hydraulischen Antriebe umfasst, die zumindest eine mittels einer Servoverstellung verstellbare und in einem geschlossenen Kreislauf arbeitende Hydraulikpumpe aufweisen.

Die Technik tendiert zu immer größeren Leistungen, die oft mit der Forderung verbunden sind, eine Möglichkeit der Drehrichtungsumkehr bzw. der Antriebsrichtungsumkehr vorzusehen. Gleichzeitig wird der Aspekt der Anpassung der Leistung an den tatsächlichen Bedarf unter dem Gesichtspunkt der Energieeinsparung immer wichtiger. Wegen der hohen realisierbaren Wirkungsgrade und wegen ihrer robusten und zuverlässigen Kraftübertragung werden vielfach hydraulische Antriebe eingesetzt. Hydraulische Antriebe werden auch dann bevorzugt, wenn das Einsatzgebiet große Temperaturschwankungen aufweist und/oder große Schwankungen in der Leistungsaufnahme bzw. -abgabe zu erwarten sind. Die hierbei zum Einsatz kommenden Regel- und Steuermechanismen bzw. -vorrichtungen haben sich seit Jahren als sehr flexibel, schnell und überaus zuverlässig erwiesen.

Typischerweise werden im geschlossenen Hydraulikkreislauf Hydraulikpumpen verwendet, welche für beide Förderrichtungen den gleichen charakteristischen Zusammenhang zwischen Eingangssignal und Fördervolumen aufweisen. Dies wird herkömmlich über Servoverstelleinrichtungen bewerkstelligt, die von Steuervorrichtungen angesteuert eine Verstellung der Hydraulikeinheit über Verschwenkelemente, wie Schrägscheiben oder Schrägachsen, bewirken. Dabei ist es üblich, dass sich das Fördervolumen der hydraulischen Maschine proportional zum Eingangssignal verhält. Verstellbare und/oder reversible hydraulische Antriebe mit einem geschlossenen Hydraulikkreis werden bspw. auch für Fahrantriebe verwendet, womit beide Fahrrichtungen realisiert werden. Bei Ausbleiben eines Eingangssignals werden die Förderpumpen oftmals in eine Nullstellung verbracht, in der sie kein Fördervolumen zeigen, womit ein Fahrantrieb bspw. zum Stillstand gebracht werden kann.

Grundsätzlich können Servoverstelleinrichtungen mit einer Nullstellung auch für Antriebe verwendet werden, bei denen bei Ausbleiben des Eingangssignals die Servoverstelleinrichtung nicht in die Nullstellung verbracht wird, sondern in eine ausgelenkte Stellung, damit, bspw. im Falle eines Lüfterantriebs, weiterhin eine Kühlleistung durch den Lüfter erzeugt werden kann. Dies ist insbesondere bei Ausfall der Elektrik eine Notfallfunktion, da Steuervorrichtungen für hydraulische Antriebe oftmals mit elektrischen Proportionalmagneten angesteuert werden.

Eine spezielle Steuervorrichtung für Lüfterantriebe im geschlossenen Hydraulikkreislauf ist in DE 10 2010 009 975 A1 beschrieben. Die dort beschriebene Steuervorrichtung stellt sicher, dass bspw. ein Lüfter bei Ausbleiben des Eingangssignales an der Steuervorrichtung mit maximaler Drehzahl arbeitet. Hierbei wird der Steuerkolben in der Steuervorrichtung, der in einem zweiseitigen Steuerzylinder geführt ist, bei Ausbleiben eines Eingangssignales von einer Feder in eine maximal ausgelenkte Stellung gegen einen mechanischen Festanschlag verschoben. Durch die Verschiebung des Steuerkolbens im Steuerzylinder in eine maximal ausgelenkte Stellung gibt der Steuerkolben auf einer Seite des Steuerzylinders eine Zuleitung zu einer Servoverstellung einer Verstellpumpe frei und öffnet gleichzeitig eine Ableitung für Steuerflüssigkeit auf der anderen Steuerzylinderseite. Dadurch wird die Servoverstellung einseitig mit unter Druck stehender Steuerflüssigkeit versorgt. Im gewählten Beispiel des mit Federkraft einseitig beaufschlagten Steuerkolbens wird dieser und der mit der Steuervorrichtung hydraulisch verbundene Servokolben maximal auf eine Seite ausgelenkt, wodurch die hydraulische Verstellpumpe maximal ausschwenkt und der Lüfter mit maximaler Antriebsleistung über einen Hydraulikmotor angetrieben wird. Im Stand der Technik begrenzt ein Nullhubventil den Hydraulikdruck, der dem Hydraulikmotor zugeführt wird, und somit die maximale Lüfterdrehzahl.

Über einen Proportionalmagneten kann auf den Steuerkolben ein Eingangssignal in Form einer Magnetkraft erzeugt werden, wodurch der Steuerkolben mit steigendem Eingangssignal, d.h. mit steigender Magnetkraft, der auslenkenden Kraft der Feder entgegenwirken kann und so den Steuerkolben in Richtung Neutralstellung oder gar auf die andere Seite im Steuerzylinder verschieben kann. In der Neutralstellung des Steuerkolbens im Steuerzylinder sind die Zu- und Ableitungen zur Servoverstellung nahezu druckausgeglichen. Dadurch befindet sich die Servoverstellung in einer Nullstellung, und die Hydraulikpumpe ist nicht ausgeschwenkt und zeigt somit auch keinen Förderstrom. Fördert die Hydraulikpumpe keinen Hydraulikstrom, kann auch der Hydraulikmotor nicht angetrieben werden, wodurch konsequenterweise der Lüfter steht.

Wird der Steuerkolben durch die Kraft des Proportionalmagneten über die Neutralstellung hinaus auf die andere, zweite Seite im Steuerzylinder verschoben, so wird auf der zweiten Seite des Steuerzylinders eine Zuleitung für Steuerflüssigkeit zur Servoverstelleinrichtung geöffnet und gleichzeitig auf der ersten Seite des Steuerzylinders, auf der zuvor die Zuleitung geöffnet war, eine Ableitung für Steuerflüssigkeit freigegeben, so dass die Servoverstelleinrichtung die Hydraulikpumpe auf die andere Seite ausschwenken kann und der Hydraulikflüssigkeitsstrom im geschlossenen Kreislauf andersherum fließt. Geht man gedanklich von einem Konstantmotor aus oder von einem einseitig verstellbaren Hydraulikmotor mit variablem Schluckvolumen, so dreht sich die Drehrichtung des Motors um, wodurch auch der Lüfter in seiner Drehrichtung umgekehrt werden kann. Insbesondere bei Lüftern für Verbrennungsmotoren spricht man in einer Drehrichtung von einer Kühlleistung des Lüfters und bei Umkehr der Drehrichtung von einer Ausblasleistung, mit der bspw. warme Luft aus dem Fahrzeug oder der Maschine in die Umgebung ausgeblasen und/oder der Kühler gereinigt wird.

Das oben beschriebene System gemäß DE 10 2010 009 975 A1 benötigt für seine vorgesehene Funktionsweise Druckbegrenzungsventile, bevorzugt in Form von Nullhubventilen, welche den maximalen Druck auf der jeweiligen Seite im Servosystem begrenzen, damit es zu keiner Überlastung des hydrostatischen Antriebs kommt. Diese Anordnung von Druckbegrenzungsventilen für die Begrenzung der maximalen Leistung in den Zu- und Abführleitungen der Servoeinrichtung sind konstruktiv aufwändig und in ihrer Realisierung kostenintensiv. Außerdem nehmen derartige Druckbegrenzungsventile bzw. Nullhubregelventile einen großen Bauraum im Gehäuse der Verstellpumpe ein, wodurch das Gehäusevolumen entsprechend groß ausgelegt werden muss. Durch die Begrenzung der maximalen Leistung über Druckbegrenzungsventile in den Servodruckleitungen oder durch Nullhubregelventile, die über den Betriebsdruck die Servoverstelleinrichtung in ihrer maximalen Ausschwenkung begrenzen (siehe DE 10 2010 009 975 A1), ist die am Hydraulikmotor des hydrostatischen Antriebs ankommende Leistung abhängig von der Förderpumpendrehzahl. Je höher die Drehzahl der Förderpumpe, desto höher das Fördervolumen und der Förderdruck, welcher durch Nullhubventile begrenzt werden muss. Solange jedoch der Förderdruck unter einem vorgegebenen Grenzwert bleibt, an dem die Nullhubventile ansprechen, werden Schwankungen in der Pumpleistung an den Hydromotor weitergeben.

Aufgabe der vorliegenden Erfindung ist es, ausgehend von DE 10 2010 009 975 A1 eine Steuervorrichtung für Servoverstelleinrichtungen für Hydraulikpumpen im geschlossenen hydraulischen Kreis für hydrostatische Antriebe bereitzustellen, welche bei nicht vorhandenem Steuersignal eine Antriebsleistung gewährleistet. Die damit erreichbare Antriebsleistung soll zur Vermeidung von Überlastungen auf einfache, kostengünstige und platzsparende Art und Weise durch eine Steuervorrichtung begrenzbar sein werden und zudem soll die Steuervorrichtung die hydrostatische Antriebsleistung in allen Betriebssituationen, insbesondere bei schwankender Verstellpumpenantriebsdrehzahl, konstant halten. Das Steuersignal bzw. Eingangssignal für die Steuervorrichtung soll weiterhin als Sollwertvorgabe für die Antriebsleistung verwendbar sein. Mit der erfindungsgemäßen Steuervorrichtung soll erreicht werden, dass bei einmaliger Einstellung der geforderten/gewünschten Antriebsleistung/Verbraucherdrehzahl diese unabhängig von der Antriebs- oder der Drehrichtung konstant bleibt und, insbesondere im Falle eines Lüfterantriebs, die Lüfterdrehzahl konstant gehalten wird. Dabei sollen Druckbegrenzungsventile und/oder Nullhubventile weitestgehend vermieden werden.

Diese Aufgabe wird mit einem hydrostatischen Antrieb gemäß Anspruch 1 gelöst, wobei vorteilhafte Ausführungsformen in den von Anspruch 1 abhängigen Unteransprüchen angegeben sind.

In dem erfindungsgemäßen hydrostatischen Antrieb mit einer erfindungsgemäßen Steuervorrichtung in einem geschlossenen Hydraulikkreislauf, in dem zumindest ein Hydraulikmotor -in konstanter oder verstellbarer Bauart-und eine bevorzugt reversible Verstellpumpe angeordnet sind, wird über eine Speisepumpe die Steuervorrichtung mit einer unter Druck stehenden Steuerflüssigkeit mit Steuerdruck versorgt, wobei die Steuervorrichtung zur gesteuerten Beaufschlagung einer zweiseitigen Servoverstelleinheit dient. Befindet sich die Steuereinheit in einer Neutralstellung, so sind die Drücke, welche auf die zweiseitige Servoverstelleinheit wirken, druckausgeglichen, wodurch die Servoverstelleinheit sich in einer Nullstellung befindet, in der der Servokolben nicht ausgelenkt ist. Die hierbei zum Einsatz kommende herkömmliche Servoverstelleinheit weist einen doppelseitigen Servokolben auf, der im Servozylinder in zwei Richtungen verschiebbar ist. Über eine Verstelleinrichtung - bspw. eine Schrägscheibe im Falle einer Axialkolbenmaschine in Schrägscheibenbauart-kann die hydraulische Verstellpumpe in ihrer Förderleistung in beiden Richtungen verstellt werden.

Die Steuervorrichtung für die gesteuerte Beaufschlagung der zweiseitigen Servoverstelleinheit mit Steuerdruck weist hierzu einen in einem zweiseitigen Steuerzylinder geführten Steuerkolben mit einer ersten und einer zweiten Seite auf. Aus einer Neutralstellung, in der der Steuerkolben die mit dem Servozylinder verbundenen Servoleitungen druckausgeglichen hält, kann dieser in zwei Richtungen innerhalb des Steuerzylinders ausgelenkt werden. Wird der Steuerkolben im Steuerzylinder in eine erste Richtung ausgelenkt, so gibt er auf der ersten Seite eine mit Steuerdruck beaufschlagte Zuführleitung für eine erste Seite der Servoverstelleinrichtung frei bzw. vergrößert den Durchlass für druckbeaufschlagte Steuerflüssigkeit Dadurch wird Steuerflüssigkeit mit Steuerdruck auf die erste Seite der Servoverstelleinrichtung geleitet, wodurch der Servokolben im Servozylinder verschoben wird. Durch die Verschiebung des Servokolbens wird ein Verstellelement für die Verstellung des Fördervolumens der Hydraulikpumpe ausgeschwenkt, wodurch die Förderpumpe ein verändertes Fördervolumen zeigt. Ausgehend von der Neutralstellung des Steuerkolbens wird also bei Verschieben des Steuerkolbens die Hydraulikpumpe aus ihrer Nullstellung, in der sie kein Fördervolumen zeigt, in eine Stellung verbracht, in der sie Hydraulikflüssigkeit fördert. Damit kann in einem geschlossenen Hydraulikkreis ein Hydraulikmotor angetrieben werden, der, wenn er nicht in der Nullstellung steht, eine Antriebsleistung an einen Verbraucher abgeben kann. Dies kann bspw. in Form eines Drehantriebs für ein Lüfterrad erfolgen.

Wird der Steuerkolben aus seiner Neutralstellung verschoben, so öffnet er, wie zuvor beschrieben und auch im Stand der Technik ausgeführt, auf einer Seite des Steuerzylinders eine Zuleitung für Steuerflüssigkeit an eine erste Seite der zweiseitigen Servoverstelleinrichtung. Gleichzeitig öffnet er auf der anderen zweiten Seite des Steuerzylinders eine Ableitung für Steuerflüssigkeit von der anderen, zweiten Seite der Servoverstelleinrichtung, damit die vom Servokolben verdrängte Hydraulikflüssigkeit abgeleitet werden kann. Für die Ableitung von Steuerflüssigkeit steht ein Steuerflüssigkeitsreservoir zur Verfügung, welches im einfachsten Fall einen Tank darstellen kann. Jedoch kann die Steuerflüssigkeit auch in ein Volumen im Gehäuseinneren der Verstellpumpe abgeleitet werden, wo es von der Speisepumpe, welche den Steuerdruck erzeugt, aufgenommen werden kann.

Innerhalb der Steuervorrichtung ist demnach im Steuerzylinder ein zweiseitig verschiebbarer Steuerkolben angeordnet, der je nach Verschiebung zur einen oder zur anderen Seite eine Zuführung von Steuerflüssigkeit mit Steuerdruck auf eine Seite der Servoverstelleinrichtung ermöglicht und gleichzeitig durch Öffnen einer Ableitung die Abführung von Hydraulikflüssigkeit von der anderen Servoseite auf der zweiten Seite im Steuerzylinder freigibt. Dies ist eine für den Fachmann übliche Konstruktion einer Steuervorrichtung für die gesteuerte Beaufschlagung einer zweiseitigen Servoverstelleinheit mit Steuerdruck zur Erzielung einer Auslenkung oder Verstellung einer (reversiblen) hydraulischen Verstellpumpe. Gleiches bzw. Analoges gilt für die Verstellung von verstellbaren und/oder reversierbaren Hydraulikmotoren.

Für die Auslenkung des Steuerkolbens im Steuerzylinder ist ein Eingangssignal bzw. eine Kraft notwendig, welche den Kolben im Steuerzylinder verschiebt. Ausgehend vom eingangs angegebenen Stand der Technik und von der Annahme, dass bei Ausbleiben eines Steuersignals der Steuerkolben zu einer Seite im Steuerzylinder durch eine Vorspannkraft verschoben sein soll, ist die Verstellpumpe ausgeschwenkt, damit auch ohne Eingangssignal eine Leistung vom hydraulischen Antrieb abgeben werden kann. Damit eine maximalle Grenzleistung der Verstellpumpe nicht überschritten wird, muss der Druck, der auf die Servoverstelleinrichtung zur Auslenkung der Verstellpumpe erzeugt wird, begrenzt werden. Dies geschieht im Stand der Technik durch Druckbegrenzungsventile, insbesondere durch Nullhubventile, die bei Überschreiten eines maximalen Arbeitsdrucks/Betriebsdrucks auf der Hochdruckseite im geschlossenen Hydraulikkreislauf auf die Servoverstelleinheit in der Art einwirken, dass die Auslenkung der Servoverstelleinheit und damit das Ausschwenken der hydrostatischen Einheit begrenzt bzw. bei Überschreiten des Drucks die Ausschwenkung zurückgenommen wird. Diese Nullhubregelung ist jedoch in ihrer Ausführung aufwändig und soll von der Erfindung vermieden werden.

Der Steuerkolben in der Steuervorrichtung wird im Steuerzylinder bevorzugt durch ein Vorspannelement in eine ausgelenkte Stellung verbracht, damit über die freigegebene Servodruckleitung die Servoverstellung ausgelenkt wird und die hydraulische Verstelleinheit ein Fördervolumen zeigt. Es ist daher notwendig, den Druck, der an die Servoverstelleinrichtung geleitet wird, in seiner Höhe zu begrenzen. Erfindungsgemäß wird dies dadurch erreicht, dass der Betriebsdruck der Hochdruckseite, welcher im einfachsten Fall dem Förderdruck der Hydraulikpumpe im geschlossenen Hydraulikkreislauf entspricht, über eine Rückführleitung auf eine Stirnseite des Steuerkolbens zurückgeführt wird, bevorzugt auf die dem Vorspannelement gegenüberliegende Seite, damit der Betriebsdruck eine gegen das Vorspannelement wirkende Kraft auf den Steuerkolben ausüben kann.

Somit wirkt erfindungsgemäß bei nicht angelegtem Steuersignal und angetriebener Verstellpumpe das Vorspannelement gegen den an die Steuervorrichtung rückgeführten Betriebsdruck, wodurch sich ein Gleichgewicht einstellt, an dem der Steuerkolben im Steuerzylinder ausgelenkt ist und auf einer Seite des Steuerzylinders eine Servodruckleitung für die Versorgung einer Seite der Servoverstelleinrichtung mit Steuer- /Speisedruck freigibt. Gleichzeitig ist auf der anderen Seite des Steuerzylinders eine Abteilung von Steuerflüssigkeit von der anderen Seite der Servoverstellung geöffnet, so dass der Servokolben sich in einer ausgelenkten Stellung befindet und die Verstellpumpe ein Fördervolumen erzeugt, mit dem bspw. ein Lüfter angetrieben werden kann. Die Höhe des Betriebsdrucks, der von der Verstellpumpe erzeugt wird, ist dabei vom Grad der Auslenkung des Steuerkolbens im Steuerzylinder abhängig. Ohne Steuersignal bzw. Eingangssignal ist der Betriebsdruck somit von der Höhe der Kraft des Vorspannelementes, die auf den Steuerkolben wirkt, abhängig, wobei der Betriebsdruck der Kraft des Vorspannelementes entgegenwirkt und dieser das Gleichgewicht hält.

Der Betriebsdruck kann bevorzugt direkt auf eine Stirnseite des Steuerkolbens geführt werden. In diesem Fall ergibt sich über die Stirnfläche des Steuerkolbens die dem Vorspannelement entgegen wirkende Kraft aus dem Betriebsdruck für den Hydraulikmotor. Steigt der Betriebsdruck, bspw. auf Grund einer Drehzahlerhöhung des Verbrennungsmotors, für den Antrieb der Verstellpumpe an, so steigt auch die aus dem Betriebsdruck resultierende Gegenkraft am Steuerkolben, wodurch der Steuerkolben in Richtung Neutralstellung (zurück-)verschoben wird. Damit nimmt der Druck in der Servodruckleitung zur Beaufschlagung der ersten Seite der Servoverstelleinheit ab, da der Querschnitt für die Zuführung von druckbeaufschlagter Steuerflüssigkeit zum Servokolben verringert wird. Dadurch wird der Servokolben durch die üblicherweise am Servokolben angeordneten Servofedern in Richtung Nulilage verschoben, wodurch das Verstellelement (z. B. Schrägscheibe) die Ausschwenkung der Verstelleinheit zurücknimmt. Hierdurch ist ein sich selbstregelndes hydrostatisches Regelsystem für hydrostatische Antriebe mit einer zweiseitigen Servoverstelleinheit bereitgestellt, welches ohne Druckbegrenzungsventile bzw. Nullhubventile zur Maximalleistungsbegrenzung auskommt. Dennoch ist das System sicher vor Überlast geschützt. Das erfindungsgemäße Steuersystem kommt mit einer einfachen Druckrückführleitung aus, die den Hochdruck aus dem Arbeitskreis des hydrostatischen Antriebs auf eine Stirnseite des Steuerkolbens leitet.

Das erfindungsgemäße Steuersystem für hydrostatische Antriebe in einem geschlossenen Hydraulikkreislauf ist nicht nur bzgl. der Maximalleistung, die der hydrostatische Antrieb abgeben kann, selbstregulierend. In allen Leistungsstufen des hydrostatischen Abtriebs ist es ebenfalls nicht erforderlich, auf den Steuerkolben oder auf das an der Steuervorrichtung angelegte Steuer- oder Regelsignal regelnd einzuwirken, damit die am Hydromotor ankommende hydraulische Förderleistung konstant bleibt und insbesondere einen an der Steuervorrichtung eingestellten Wert nicht übersteigt. Speziell bei einem Steuersignal gleich null wird ein vorbestimmter konstanter Leistungswert, welcher beispielsweise einem optimalen Betriebspunkt des hydrostatischen Antriebs entspricht oder eine maximale Leistung definiert, nicht überschritten. Dieser konstante Wert wird u.a. durch die Höhe der Vorspannkraft, die auf den Steuerkolben wirkt, vorgegeben. Bevorzugt ist die Vorspannkraft daher in ihrer Höhe einstellbar, womit auf die Antriebsleistung bei Steuersignal gleich null Einfluss genommen werden kann.

Über das Vorspannelement, welches im einfachsten Fall eine Zug- oder Druckfeder darstellt, jedoch auch jede andere mechanisch, elektrische, pneumatische oder auch hydraulische erzeugbare Kraft sein kann, ist insbesondere der Maximalwert der hydrostatischen Leistung vorgebbar, die am hydrostatischen Motor abgenommen werden kann, wenn das Steuersignal gleich null ist.

In normalen Betriebssituationen ist es jedoch meist nicht notwendig, dass die maximale hydrostatisch erzeugbare Antriebsleistung zur Verfügung steht. Schon geringere Leistungsabgaben sind meist ausreichend, um die Gesamtfunktion der Maschine, in der der hydrostatische Antrieb eingebunden ist, zu erfüllen. Geht man von einem Steuersignal gleich null aus, an dem die zur Verfügung gestellte Antriebsleistung maximal ist, so muss zur Reduzierung der zur Verfügung gestellten Antriebskraft der Steuerkolben von einem Aktuator in Richtung Neutralstellung verschoben werden, was fachüblich bspw. mit einem mit elektrischer Spannung beaufschlagbaren Proportionalmagneten erreicht werden kann. Dazu muss der Aktuator eine gegen das Vorspannelement gerichtete Kraft auf den Steuerkolben erzeugen, wobei die durch den Aktuator erzeugte Kraft durch den hydraulischen Betriebsdruck, bzw. der hieraus resultierenden Kraft, unterstützt wird. Wird also auf einen Aktuator zum Bewegen des Steuerkolbens ein von Null ansteigendes Steuersignal aufgebracht, so wird der Steuerkolben aus seiner ausgelenkten Stellung - in die er durch das Vorspannelement verbracht und in der er durch die Kraft aus dem Betriebsdruck gehalten wurde-zunächst in Richtung Neutralstellung verschoben. Der Durchfluss durch die Zuführleitung, welche durch die ausgelenkte Stellung des Steuerkolbens im Steuerzylinder geöffnet ist, wird dadurch reduziert. Mit der Reduzierung des Steuerdrucks in der Zuführleitung an die Servoverstellung reduziert sich der Druck auf der entsprechenden Seite des Servokolbens, wodurch der Servokolben aus seiner ausgelenkten Stellung in Richtung Nullstellung verschoben wird und so über das Verstellelement die Ausschwenkung der hydrostatischen Einheit zurückgenommen wird.

Wird durch Erhöhen des Steuersignals auf einen Aktuator zur Verstellung des Steuerkolbens die Leistung des hydraulischen Antriebs solange reduziert, bis sich der Steuerkolben in der Neutralstellung befindet, in der die Druckleitungen von der Steuervorrichtung zur Servoverstelleinrichtung druckausgeglichen sind, so zeigt in dieser Neutralstellung des Steuerkolbens die hydrostatische Verstelleinheit keine Förderleistung. Am hydrostatischen Motor kann in dieser Stellung des Steuerkolbens im Steuerzylinder keine Antriebsleistung abgenommen werden.

Wird das Steuersignal weiter erhöht, so wird der Steuerkolben auf die zweite Seite im Steuerzylinder verschoben. Die auf der zweiten Seite im Steuerzylinder angeordnete Servodruckleitung wird dann mit Steuerflüssigkeit mit Steuerdruck versorgt, wodurch auf der zweiten Servokolbenseite der Druck erhöht und der Servokolben in Richtung der ersten Servokolbenseite ausgelenkt wird. Durch die Auslenkung des Servokolbens auf die erste Seite im Servozylinder wird das Verstellelement in die andere Richtung als die zuvor für Steuersignal gleich Null beschriebene Richtung ausgeschwenkt, wodurch die Förderpumpe ihre Förderrichtung umdreht. Durch Umkehr der Förderrichtung wird auch die Kreislaufrichtung der Hydraulikflüssigkeit für den Antrieb des hydrostatischen Motors gewechselt, wodurch dieser ebenfalls in seiner Drehrichtung umkehrbar ist. Damit kann ein an dem hydrostatischen Motor angeschlossener Verbraucher in seiner Antriebs- bzw. Arbeitsrichtung umgedreht werden.

Im Verlauf der Zunahme der Stärke eines Steuersignals wird, von einem Wert Null ausgehend, also zunächst die Leistung des hydrostatischen Antriebs verringert, bis der Steuerkolben seine Neutralstellung erreicht hat, und in der Folge, bei weiter steigender Stärke des Steuersignals, wird der Steuerkolben auf die zweite Seite im Steuerzylinder verschoben, so dass die Leistungsabgabe des hydrostatischen Antriebs wieder zunimmt, jedoch mit umgedrehtem Drehsinn im hydrostatischen Kreislauf. Mit Zunahme des Steuersignals über die Kraft des Vorspannelements hinweg nimmt die reversierte Leistung des hydrostatischen Antriebs zu.

Mit dem erfindungsgemäßen hydrostatischen Antrieb wird demnach erreicht, dass das Steuersignal einem zugeordneten Leistungsabgabewert entspricht, womit das Steuersignal als Sollwertvorgabe für die abzugebende Leistung verwendet werden kann. Ist bspw. kein Steuersignal am Aktuator für den Steuerkolben angelegt, so gibt der hydrostatische Antrieb eine vorbestimmte maximale Leistung in einer Richtung ab. Bei jedem Steuersignalwert, der zwischen null und dem Wert liegt, in dem der Aktuator den Steuerkolben in die Neutralstellung verbracht hat, wird eine Vorgabe für eine reduzierte Leistung in der ersten Richtung vorgegeben. Bei einem Steuersignalwert, bei dem die Kraft, die der Aktuator auf den Steuerkolben bewirkt, gleich der Kraft ist, welche vom Vorspannelement auf den Steuerkolben aufgebracht wird, ist die hydrostatische Leistungsabgabe gleich null, da in diesem Zustand der Steuerkolben in der Neutralstellung ist. Gleichzeitig-die hydrostatische Leistung ist gleich null-liegt kein Betriebsdruck auf einer Stirnseite des Steuerkolbens an, wodurch die Gleichgewichtsstellung durch eine Gegenkraft, beispielsweise die eines Proportionalmagneten, zum Vorspannelement einhaltbar ist. Selbstredend kann die Kraft des Vorspannelementes einstellbar sein, wodurch weitere Möglichkeiten für eine gesteuerte Beaufschlagung der Servoverstelleinheit mit Steuerdruck erzielbar sind.

Ist die Kraft auf den Aktuator, welche aus dem Steuersignal herrührt, größer als die Kraft des Vorspannelementes, so wird der Steuerkolben auf eine zweite Seite im Steuerzylinder verschoben, in der das Vorzeichen für die hydrostatische Leistungsabgabe-im Vergleich zum Zustand mit Steuersignal gleich null-umdreht ist. Je weiter der Steuerkolben auf die zweite Seite im Steuerzylinder verschoben wird, also mit steigendem Steuersignal bzw. mit steigender Kraft auf den Aktuator für die Bewegung des Steuerkolbens, steigt auch die hydraulische Leistung im reversierten Zustand. In diesem Bereich ist die Stärke des Steuersignals dementsprechend direkt proportional zur reversierten hydraulischen Antriebsleistung. Es versteht sich, dass die Höhe der Antriebsleistung im jeweiligen Betriebszustand-mit im oder gegen den Uhrzeigersinn drehender Verstellpumpe-in ihren Maximalwerten unterschiedlich sein kann, je nach Anwendung, wo der erfindungsgemäße hydrostatische Antrieb bzw. die erfindungsgemäße Steuervorrichtung Anwendung findet.

Ist die Signalstärke für die Generierung der Aktuatorkraft niedriger als die Kraft, welche durch das Vorspannelement erzeugt wird, so verhält sich die hydrostatische Antriebsleistung umgekehrt proportional zur Stärke des Steuersignals. Ist die Aktuatorkraft größer als die Kraft des Vorspannelements, so verhält sich die hydrostatische Antriebsleistung direkt proportional zur Signalstärke.

In einer weiteren bevorzugten Ausführungsform ist der im zweiseitigen Steuerzylinder angeordnete Steuerkolben auf derselben Seite, an der das Vorspannelement angeordnet ist, mit einer weiteren, zweiten Rückführleitung hydraulisch verbunden, die den Steuerkolben hydraulisch entweder mit der an derselben Steuerkolbenseite befindlichen Servoleitung oder mit der Niederdruckleitung des Hydraulikkreises hydraulisch verbindet. Die im Normalbetrieb bzw. in der bevorzugten Drehrichtung der Verstellpumpe als Niederdruckleitung agierende Verbindungsleitung zwischen Verstellpumpe und Hydraulikmotor wird im reversierten Betrieb der Verstellpumpe zur Hochdruckleitung. Mit der zweiten Rückführleitung wird, wenn die Verstellpumpe in ihrer bevorzugten Drehrichtung arbeitet, Hydraulikfluid mit Niederdruck oder Steuerdruck, ggf. aufgestaut durch eine zusätzliche Drossel, auf die Seite des Steuerkolbens geführt, die durch das Vorspannelement belastet ist. Dadurch wird ein weicheres, ggf. gedämpftes Zurückschwenken der Verstellvorrichtung der Hydraulikpumpe von einer für die bevorzugte Drehrichtung ausgeschwenkten Stellung in Richtung Nullstellung erreicht. Wird der Steuerkolben durch die Kraft des Aktuators über eine Neutralstellung hinaus bewegt, so ist die durch den Steuerdruck erzeugte Gegenkraft meist nicht ausreichend, um ein vollständiges Ausschwenken im reversierten Betrieb zu verhindern und ein Kräftegleichgewicht aufrechtzuhalten. Dies hängt auch damit zusammen, dass der Verschiebeweg des Steuerkolbens, welcher ausreicht, um die Verstellvorrichtung der Hydraulikpumpe in eine voll ausgelenkte Stellung zu verbringen, derart kurz ist, dass der Federweg des Vorspannelements nur eine sehr geringe Kraftzunahme entwickelt, die der Aktuatorkraft entgegensteht.

Für den reversierten Betrieb wird man daher bevorzugt die im reversierten Betrieb im Arbeitskreislauf mit Hochdruck beaufschlagte Verbindungsleitung zwischen Verstellpumpe und Hydraulikmotor mit der Seite des Steuerkolbens verbinden, an der auch das Vorspannelement angeordnet ist, damit der Hochdruck eine lastabhängige Gegenkraft am Steuerkolben gegen die Aktuatorkraft aufbauen kann. So kann auch im reversierten Betrieb lastabhängig geregelt werden, und auch hier, genauso wie im "Normalbetrieb", bewirkt eine konstante Aktuatorkraft eine konstante Leistung am Hydraulikmotor, die bei Schwankungen der Drehzahl an der Verstellpumpe und bei einem Konstanthalten der Aktuatorkraft selbsttätig über den Hochdruck auf einen konstanten Wert geregelt wird. Beispielsweise hat eine Zunahme der Drehzahl der Verstellpumpe bei Rückführung der im reversierten Betrieb als Hochdruckleitung agierenden Verbindungsleitung zwischen Hydraulikpumpe und Hydraulikmotor auf der dem Vorspannelement zuwandten Seite des Steuerkolbens eine Verringerung der Ausschwenkung der Hydraulikpumpe zur Folge, da der Hochdruck steigt, wodurch der Volumenstrom an Hydraulikfluid sinkt und so die hydraulische Leistung, die am Hydraulikmotor abnehmbar ist, konstant bleibt.

Im Folgenden wird die Erfindung anhand von Ausführungsbeispielen beispielhaft detailliert beschrieben, wobei die beschriebenen Ausführungsbeispiele den Schutzumfang der Erfindung nicht begrenzen. Im Einzelnen zeigen:
- Figur 1: eine erste Ausführungsform in schematischer Darstellung bei einem Steuersignal gleich null;
- Figur 2: eine zweite Ausführungsform in schematischer Darstellung bei einem Steuersignal gleich null;
- Figur 3: eine erfindungsgemäße Steuervorrichtung in schematischer Darstellung; und
- Figur 4: eine dritte Ausführungsform in schematischer Darstellung bei einem Steuersignal gleich null.

Der erfindungsgemäße hydraulische Antrieb wird nachfolgend am Beispiel eines Lüfterantriebs dargestellt, wobei wie oben bereits erläutert, der hydraulische Antrieb in vielfach anderen Anwendungen eingesetzt werden kann. Das herausgenommene Beispiel für einen Lüfterantrieb wird weiter bevorzugt in Verbindung mit einer Verbrennungsmaschine, welche den hydraulischen Antrieb bzw. die Hydraulikpumpe des hydrostatischen Antriebs antreibt, in beispielhafter Form beschrieben, was jedoch den Erfindungsgedanken nicht einschränkt. Das gewählte Beispiel eines Lüfterantriebes dient lediglich der vereinfachten Beschreibung der Erfindungsidee und ist nicht darauf beschränkt. Für die Antriebsenergiebereitstellung für den hydrostatischen Antrieb können, ohne vom Erfindungsgedanken abzuweichen, auch elektrische, pneumatische, mechanische und insbesondere regenerative Energiequellen verwendet werden.

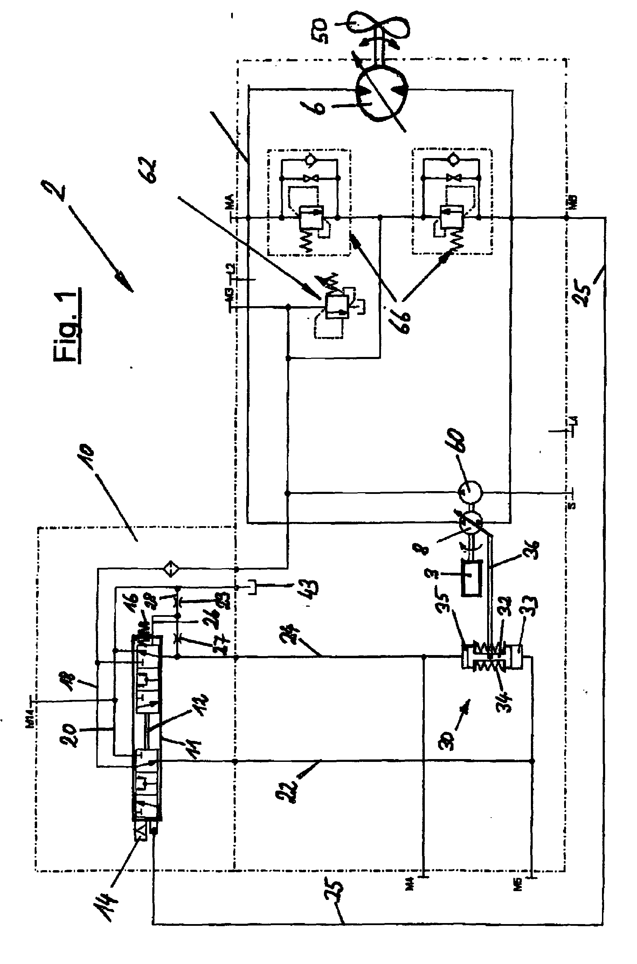

In Figur 1 ist ein hydraulischer Schaltplan dargestellt, in dem eine erste Ausführungsform der Erfindung gezeigt ist. Der in Figur 1 dargestellte hydrostatische Antrieb 2 zeigt zur Steuerung der Verstellpumpe 8 eine Steuervorrichtung 10 mit einem Steuerkolben 12, der längs seiner Längsachse in zwei Richtungen von einem Aktuator 14 und einem Vorspannelement 16 bewegt werden kann. Bei der Verschiebung des Steuerkolbens 12 werden wechselseitig Zu- und Ableitungen für Steuerflüssigkeit 18 und 20 mit einer ersten Servoleitung 22 bzw. einer zweiten Servoleitung 24 hydraulisch verbunden. In der in Figur 1 dargestellten Position des Steuerkolbens 12 ist die Zuleitung 18 für Steuerflüssigkeit mit der Servoleitung 22 verbunden, wodurch Steuerflüssigkeit mit Steuerdruck auf eine erste Seite 33 einer Servoverstelleinheit 30 geleitet wird. Der Steuerdruck wird dabei von einer Speisepumpe 60 erzeugt, welche über die Leitung 18 Steuerflüssigkeit zur Steuervorrichtung 10 fördert. Eine zweite Seite 35 der Servoverstelleinheit 30 wird über die andere Seite des Steuerkolbens 12 mit der Ableitung 20 verbunden, die die Steuerflüssigkeit beispielsweise in einen Tank 43 ableitet.

Bei der in Figur 1 dargestellten Position des Steuerkolbens 12 ist somit die erste Seite 33 der Servoverstelleinheit 30 mit Steuerdruck beaufschlagt, wodurch sich der Servokolben 32 in einer aus der Nulllage verschobenen Stellung befindet und so über die Verschwenkvorrichtung 36 die Verstellpumpe 8 ausschwenkt. In ihrer ausgeschwenkten Stellung fördert die Verstellpumpe 8 Hydraulikflüssigkeit an den Hydromotor 6, der eine Antriebsleistung an den Verbraucher-im vorliegenden Ausführungsbeispiel ein Lüfter 50-abgeben kann, sofern der Hydraulikmotor 6 ebenfalls in einer ausgeschwenkten Stellung ist und ein Fördervolumen aufnehmen kann.

Die Verstellpumpe 8 und der Hydraulikmotor 6 sind dabei über einen geschlossenen Hydraulikkreislauf 4 verbunden, wobei in der Verbindungsleitung in Förderrichtung von der Verstellpumpe 8 zum Hydraulikmotor 6 Hochdruck und in der Verbindungsleitung vom Motor 6 zur Verstellpumpe 8 Niederdruck herrscht.

Die in Figur 1 dargestellte Position des Steuerkolbens 12 in seiner ausgelenkten Stellung auf einer ersten Seite innerhalb eines Steuerzylinders 11 stellt die Situation dar, in der auf einen Aktuator 14 kein Eingangssignal bzw. kein Steuersignal aufgebracht ist und der Aktuator 14 somit keine Kraft auf dem Steuerkolben ausübt. Die Auslenkung des Steuerkolbens 12 auf eine erste Seite im Steuerzylinder 11 wird daher von einem Vorspannelement 16 bewerkstelligt, welches in dem in Figur 1 dargestellten Ausführungsbeispiel auf der dem Aktuator 14 gegenüberliegenden Seite des Steuerkolbens 12 angreift und beispielsweise als Druckfeder ausgebildet ist. Das Vorspannelement 16 verschiebt den Steuerkolben 12 in eine ausgelenkte Stellung, so dass die Servoleitung 22 mit Steuerdruck von der Speisepumpe 60 beaufschlagt wird und über Druckbeaufschlagung der ersten Seite 33 der Servoverstelleinrichtung 30 der Servokolben 32 in Richtung auf die zweite Seite 35 der Servoverstelleinrichtung 30 verschoben wird, wodurch über die Verschwenkeinrichtung 36 die Verstellpumpe 8 ausgelenkt wird. Das vom Servokolben 32 auf der zweiten Seite 35 der Servoverstelleinheit 30 verdrängte Steuerflüssigkeitsvolumen wird über die zweite Servoleitung 24 über die zweite Seite des Steuerkolbens 12 zu einer Ableitung 20 geleitet, die wiederum die Steuerflüssigkeit zu einem Steuerflüssigkeitsreservoir ableitet. In dem dargestellten Ausführungsbeispiel stellt dieses Steuerflüssigkeitsreservoir einen Tank 43 dar.

In ihrer ausgeschwenkten Stellung gemäß Fig. 1 weist die Verstellpumpe 8 ein Fördervolumen auf, wodurch in der Verbindungsleitung von der Verstellpumpe 8 zum Hydraulikmotor 6 ein Hochdruck herrscht, der den Hydraulikmotor 6 antreibt. In dieser Verbindungsleitung zwischen Verstellpumpe 8 und Hydromotor 6 ist eine Rückführleitung 25 für den Betriebsdruck angeordnet die den Betriebsdruck auf die erste Seite des Steuerkolbens 12 zurückführt. In der dargestellten Betriebssituation ist der Betriebsdruck gleich einem Hochdruck. Dabei wirkt der rückgeführte Betriebsdruck auf die erste Stirnseite des Steuerkolbens 12 und bewirkt eine gegen das Vorspannelement 16 gerichtete Kraft auf den Steuerkolben 12. Durch diese Gegenkraft zu dem Vorspannelement 16 wird der Steuerkolben 12 kraftausgeglichen in einer definierten ausgelenkten Stellung gehalten, welche sich je nach Höhe des Betriebsdrucks selbsttätig einstellt. Gleichzeitig limitiert der rückgeführte Betriebsdruck die ausgelenkte Stellung, welche durch das Vorspannelement 16 verursacht wird.

Steigt beispielsweise der Betriebsdruck aufgrund einer Antriebsdrehzahlerhöhung der Verstellpumpe 8, so verschiebt der Betriebsdruck durch seine auf die erste Stirnseite ausübende Kraft den Steuerkolben 12 in Richtung Neutralstellung, d.h. in Richtung auf die zweite Seite im Steuerzylinder 11, wodurch der Druck in der Servoleitung 22 reduziert wird. Folglich wird der Druck auf die erste Seite 33 der Servoverstelleinheit 30 reduziert. Elastische Elemente 34 führen den Servokolben in seiner Auslenkung in Richtung seiner Nullstellung zurück, und die Verschwenkvorrichtung 36 nimmt die Verstellpumpe 8 in ihrer Ausschwenkung zurück. Wird die Verstellpumpe 8 in ihrer Ausschwenkung zurückgenommen, so sinkt deren Fördervolumen und damit der erzeugte Förderdruck bzw. Betriebsdruck, wodurch über die Rückführleitung 25 die Kraft, welche auf die erste Stirnseite des Steuerkolbens 12 generiert wird, abnimmt und der Steuerkolben 12 vom Vorspannelement 16 wieder in eine weiter ausgelenkte Stellung auf der ersten Seite im Steuerzylinder verbracht wird. Damit ist der Regelkreis geschlossen. Die an der Steuervorrichtung eingestellte Leistungsabgabe wird damit konstant gehalten bzw. auf einen konstanten Wert-den von der Steuervorrichtung 10 vorgegeben Wert-geregelt.

Das Vorspannelement 16 bildet zusammen mit der Rückführleitung 25 einen Regelkreis, wodurch ebenfalls eine Überlastung des hydrostatischen Antriebs 2 vermieden wird. Dabei ist erkennbar, dass die Position des Steuerkolbens 12 im Steuerzylinder 11 bei nicht angelegtem Eingangssignal auf den Aktuator 14 über das Vorspannelement 16 und den von der Verstellpumpe 8 generierten Betriebsdruck eingestellt werden kann. Hierzu ist bevorzugt das Vorspannelement 16 in seiner Vorspannkraft einstellbar. Je höher die Vorspannkraft, desto höher ist die am Hydromotor abnehmbare Leistung für den Antrieb eines Verbrauchers 50, sofern am Aktuator 14 kein Eingangssignal anliegt. Soll mit dem Hydraulikmotor 6 beispielsweise ein Lüfter 50 als Verbraucher angetrieben werden, so kann hierüber beispielsweise eine Notfallfunktion bei Ausfall des elektrischen Systems, gewährleistet werden, damit der Lüfter 50 bei laufender Verbrennungskraftmaschine 3 weiterhin ausreichend Kühlleistung für die Verbrennungsmaschine 3 erzeugt.

Das vorstehend geschilderte Ausführungsbeispiel für einen Lüfter ist analog auf andere Verbraucher, wie beispielsweise eine Klimaanlage oder eine Lichtmaschine zur Stromerzeugung innerhalb eines Fahrzeugs, ohne Weiteres übertragbar. Ist das Steuersignal am Aktuator 14, welcher bevorzugt ein Proportionalmagnet zur Erzeugung einer Gegenkraft zum Vorspannelement 16 ist, nicht vorhanden, also gleich null, so soll die am Hydromotor 6 abnehmbare Leistung einen vorgegebenen Maximalwert nicht überschreiten. Dieser entspricht in einer weiteren beispielhaften Ausführungsform dem optimalen Betriebspunkt des Hydromotors. Die Einstellung der am Hydromotor 6 abnehmbaren hydrostatischen Antriebsleistung bei variierender Drehzahl der Verstellpumpe 8 wird dabei über die Rückführung des Betriebsdrucks über die Rückführleitung 25 auf den Steuerkolben 12 im Zusammenspiel mit dem Vorspannelement 16 konstant ausgeregelt. Änderungen in der Drehzahl an der Verstellpumpe 8, die bei gleichbleibender Ausschwenkung der Verstellpumpe 8 eine Veränderung des Förderdrucks, d.h. des Betriebsdrucks mitsichziehen, werden über die Rückführleitung 25 für den Betriebsdruck auf den Steuerkolben 12 rückgeführt, welcher die Veränderung des Förderdrucks der Verstellpumpe 8 im Zusammenspiel mit dem Vorspannelement 16 ausgleicht. Damit wird sichergestellt, dass am Hydromotor 6, welcher in seiner einfachsten Form als Konstantmotor ausgebildet ist, immer die gleiche Förderleistung der Verstellpumpe 8 anliegt, wobei Schwankungen im Förderdruck über den Regelkreis durch Verstellung des Fördervolumens der Verstellpumpe 8 kompensiert werden.

Soll die Antriebsleistung des Hydraulikmotors 6 für einen Verbraucher 50 reduziert werden-es wird im Folgenden davon ausgegangen, dass die Antriebsdrehzahl für die Verstellpumpe 8 konstant bleibt -, so muss das Fördervolumen der Verstellpumpe 8 reduziert werden, d.h. die Verschwenkvorrichtung 36 muss die Ausschwenkung der Verstellpumpe 8 zurücknehmen. Dies bedeutet, dass der Servokolben 32 von einer ausgelenkten Stellung in Richtung einer Nullstellung zurückgeführt werden muss, was nur über Druckänderungen auf der ersten und zweiten Seite 33 und 35 der Servoverstelleinheit 30 erfolgen kann.

Ausgehend von der in Figur 1 dargestellten Betriebssituation des hydrostatischen Antriebs 2 kann dies über eine Rücknahme des Drucks in der Servoleitung 22 erreicht werden, wozu der Servokolben 12 in Richtung auf die zweite Seite in Servozylinder 11 verschoben werden muss. Diese Verschiebung kann mittels eines Aktuators 14, welcher bevorzugt ein Proportionalmagnet 14 ist, bewerkstelligt werden. Hierzu kann ein Eingangssignal bzw. Steuersignal auf den Aktuator 14 aufgebracht werden, wodurch-im Falle eines Proportionalmagneten-eine gegen das Vorspannelement 16 gerichtete Kraft vom Aktuator 14 auf dem Steuerkolben 12 ausgeübt wird. In dieser Betriebssituation, in der das Eingangssignal auf den Aktuator 14 größer null ist, jedoch kleiner ist als der Betrag der entgegengerichteten Kraft des Vorspannelements 16, wird durch die Summe der Kräfte aus dem Betriebsdruck und dem Aktuator 14 der Steuerkolben in Richtung auf die zweite Seite im Steuerzylinder 11 verschoben.

Steigt die Kraft, welche durch den Aktuator 14 entgegen der Kraftrichtung des Vorspannelementes 16 erzeugt wird, so wird die Auslenkung des Steuerkolbens 12 im Steuerzylinder 11, welche in Figur 1 dargestellt ist, zurückgenommen, wodurch der Öffnungsquerschnitt für die Zuleitung 18 zur Servodruckleitung 22 verkleinert wird, und so der Druck in der Servoleitung 22 sinkt. Damit sinkt auch der Druck auf der ersten Seite 33 der Servoverstelleinrichtung 30 und die Verschwenkeinrichtung 36 nimmt die Ausschwenkung der Verstellpumpe 8 - aufgrund der Rücknahme der Auslenkung des Servokolbens 32 über die Servofedern 34 - zurück.

Wie bereits für die Betriebssituation mit Eingangssignal auf den Aktuator 14 gleich null erläutert, wird die bei einem Eingangssignal größer null angestrebte Betriebssituation wiederum vom Regelkreis bestehend aus der Rückführleitung 25 und dem Vorspannelement 16 aufrechterhalten. Geht man von einem konstanten Eingangssignal für den Aktuator 14 aus, so werden Schwankungen in der Förderleistung der Verstellpumpe 8 über die Rückführung des Betriebsdruckes ausgeglichen. Somit kann über das Eingangssignal, welches im Aktuator 14 eine bestimmte Kraft auslöst, ein Sollwert für eine konstante Antriebsleistung, die am Hydraulikmotor 6 abnehmbar ist, vorgegeben werden. Die Konstanthaltung der am Hydraulikmotor 6 abnehmbaren Leistung übernimmt bei Schwankung in der Förderleistung der Verstellpumpe 8 die Steuervorrichtung 10 selbsttätig, da sie mit dem rückgeführten Betriebsdruck im Zusammenwirken mit dem Vorspannelement 16 das Fördervolumen bzw. die Auslenkung der Verstellpumpe 8 so regelt, dass die am Hydraulikmotor 6 ankommende hydraulische Leistung konstant bleibt.

In der vorangegangenen Beschreibung für ein erstes Ausführungsbeispiel der erfindungsgemäßen Steuervorrichtung für einen hydrostatischen Antrieb wurde von einer Aktuatorkraft ausgegangen, die null oder größer null ist, jedoch vom Betrag her kleiner ist als die Kraft, welche vom Vorspannelement 16 auf den Steuerzylinder 12 ausgeübt wird. Ist die Aktuatorkraft vom Betrag her genauso groß wie die Kraft, welche vom Vorspannelement 16 auf den Steuerkolben 12 ausgeübt wird, jedoch mit umgekehrten Vorzeichen, so befindet sich der Steuerkolben 12 in einer Neutralstellung, d.h. er steht zwischen der ersten und der zweiten Seite im Steuerzylinder 11 in einer etwa mittigen Ausrichtung. In dieser in den Figuren nicht dargestellten Neutralstellung, in der der Steuerkolben 12 weder zu einer noch zu der anderen Seite im Steuerzylinder 11 ausgelenkt ist, gibt der Steuerkolben 12 auf beiden Seiten im Steuerzylinder 11 die Zuleitungen 18 für Steuerflüssigkeit und auch die Ableitungen 20 für Steuerflüssigkeit in ihren Querschnitt jeweils so weit frei, dass die Drücke in den Servoleitungen 22 und 24 druckausgeglichen sind. Nur im rein theoretischen Fall ist der Steuerkolben 12 hierbei in der geometrischen Mitte des Steuerzylinders 11 zentriert, da in der Praxis sowohl der Steuerkolben 12 als auch der Steuerzylinder 11 toleranzbehaftet hergestellt sind. Die Neutralstellung ist dann erreicht, wenn die Durchflüsse durch die jeweiligen Zu- und Ableitungen 18 und 20 gleich hoch sind. Sind die beiden Servoleitungen 22 und 24 druckausgeglichen, so ist auch die erste und zweite Seite 33 und 35 der Servoverstelleinrichtung 30 druckausgeglichen, wodurch die elastischen Elemente 34 der Servoverstelleinrichtung 30 den Servokolben 32 in eine Nullstellung bringen. Mit dem Servokolben in Nullstellung befindet sich auch die Verschwenkeinrichtung 36 für die Verstellpumpe 8 in Nullstellung, wodurch die Verstellpumpe 8 ebenfalls in Nullstellung ist und kein Fördervolumen zeigt. Im Falle einer Axialkolbenpumpe in Schrägscheibenbauart als Verstellpumpe 8 befindet sich die Schrägscheibe in dieser Stellung senkrecht zur Drehachse der Axialkolbenpumpe, wodurch keine Relativbewegung der Axialkolben gegenüber ihren jeweiligen Zylindern im Zylinderblock stattfindet. Jedoch kann in dieser Stellung die Verstellpumpe 8 durch z.B. eine Verbrennungsmaschine drehangetrieben sein und jederzeit, ausgelöst durch die Steuervorrichtung 10, durch Verschwenken der Verschwenkeinrichtung 36 über die Servoverstelleinrichtung 30 ein Fördervolumen in die eine oder andere Förderrichtung erzeugen.

Mit der erfindungsgemäßen Steuervorrichtung für hydrostatische Antriebe kann eine Auslenkung der Verstellpumpe 8 aus ihrer Nullstellung, in der der Servokolben 32 in einer Nullstellung und der Steuerkolben 12 in einer Neutralstellung ist, auf zwei Arten erfolgen:
(i) Verringerung der Kraft des Aktuators 14, so dass der Steuerkolben 12 vom elastischen Vorspannelement 16 auf eine erste Seite im Steuerzylinder 11 verschoben wird,
   oder
(ii) Erhöhung der Kraft des Aktuators 14, so dass der Aktuator 14 eine größere Kraft entwickelt als der Betrag der Kraft des Vorspannelementes 16, wodurch der Steuerkolben 12 auf eine zweite Seite im Steuerzylinder 11 verschoben wird (in den Figuren nicht dargestellt).

In der auf der zweiten Seite im Steuerzylinder 11 ausgelenkten Seite öffnet der Steuerzylinder die Zuleitung 18 für Steuerflüssigkeit für die zweite Servoleitung 24 und öffnet gleichzeitig auf der ersten Seite die Ableitung 20 für Steuerflüssigkeit über die erste Servoleitung 22, um verdrängte Steuerflüssigkeit aus der ersten Seite 33 der Servoverstelleinrichtung 30 abführen zu können. Wird die Zuleitung 18 für die zweite Servodruckleitung 24 geöffnet, so steigt der Druck der zweiten Servoleitung 24 und konsequenterweise auf der zweiten Seite 35 der Servoverstelleinrichtung 30, wodurch der Servokolben 32 in Richtung auf die erste Seite 33 der Servoverstelleinrichtung 30 verschoben wird. Über die Servoleitung 22 wird die verdrängte Steuerflüssigkeit über den Steuerzylinder 11 im beschriebenen Ausführungsbeispiel in einen Tank 43 abgeleitet.

Durch eine Verschiebung des Servokolbens 32 in der Servoverstelleinrichtung 30 auf eine zweite Seite 35 im Servozylinder wird die Verschwenkeinrichtung 36 der Verstellpumpe 8 auf eine zweite Seite verschwenkt und die Verstellpumpe 8 - im Vergleich zur Situation mit einem Eingangssignal kleiner als der Betrag der Kraft des Vorspannelements 16 - andersherum ausgeschwenkt. Damit zeigt die Verstellpumpe 8 eine andere Förderrichtung für Hydraulikflüssigkeit, wodurch die Hochdruckseite im geschlossenen Hydraulikkreislauf 4 im Vergleich zur vorher geschilderten Betriebssituation wechselt und der Hydraulikmotor 6 in seiner anderen Drehrichtung betrieben werden kann. Damit kann beispielsweise im Falle eines Lüfterantriebs eine Ausblasfunktion durch den Lüfter 50 realisiert werden, bei dem der Lüfter 50 beispielsweise warme Luft vom Maschinenraum in die Umgebung ausbläst.

Um dem Steuerkolben 12 aus seiner Neutralstellung in eine zweite Stellung zu verbringen, in der die Aktuatorkraft betragsmäßig größer ist als die Kraft des Vorspannelements 16, muss bevorzugt zunächst eine Druckkraft resultierend aus einer Druckrückführung aus der Servoleitung 24 und der Vorspannkraft des Vorspannelements 16 überwunden werden. Eine zweite Rückführleitung 26 zur Rückführung des Servodrucks in der zweiten Servoleitung 24 dient zum Generieren eines erhöhten Widerstandes für die Auslenkung des Steuerkolbens 12 aus der Neutralstellung in Richtung der zweiten Seite des Steuerzylinders 11. Damit kann die Neutralstellung des Steuerkolbens 12 besser eingehalten werden, damit nicht schon kleinste Veränderungen in der Aktuatorkraft in einer Verschiebung des Steuerkolbens 12 und somit in einer Verstellung der Verstellpumpe 8 resultieren. Sowohl in die eine Richtung als auch in die andere Richtung wird bei Auslenkung des Steuerkolbens 12 auf eine der jeweiligen Stirnseiten des Steuerkolbens 12 ein hydraulischer Druck erzeugt, der versucht, den Steuerkolben in der Neutralstellung zu halten. Somit wird über diese beiden Hydraulikdrücke ein künstliches Totband erzeugt, in dem die Hydraulikdrücke den Steuerkolben 12 in seiner Neutralstellung zentrieren. Auch hier ist die Neutralstellung des Steuerkolbens 12 im Steuerzylinder 11 die, in der die Durchflüsse durch die Zu- und Ableitungen 18 und 20 zu den jeweiligen Servoleitungen 22 und 24 gleich hoch sind und somit die Drücke auf die beiden Seiten der Servoverstelleinrichtung 33 und 35 druckausgeglichen sind. Das sichere Halten des Steuerkolbens 12 in der Neutralstellung, bei der die Förderpumpe 8 kein Fördervolumen zeigt, da der Servokolben 32 und die Verschwenkeinrichtung 36 in ihrer jeweiligen Nullstellung sind, ist insbesondere bei hydrostatischen Fahrantrieben wichtig, damit ein Stillstand des Fahrzeuges zuverlässig eingestellt werden kann. Dies ist insbesondere aus sicherheitsrelevanten Aspekten für die Betriebssicherheit eines hydrostatischen Fahrantriebes wichtig.

Zum Begrenzen des hydraulischen Drucks in der zweiten Rückführleitung 27 kann eine Bypassleitung 28 vorgesehen werden, die die zweite Rückführleitung 27 mit der Ableitung 20 direkt verbindet. Bevorzugt ist in der Bypassleitung 28 eine weitere Düse 29 vorgesehen, die einen entsprechenden Staudruck für die Erzeugung des künstlichen Totbandes zulässt und die die Drücke, die in der zweiten Rückführleitung 27 und in der Ableitung 20 herrschen, ausgleicht.

Bei bekannter Kraft, die das Vorspannelement auf den Steuerkolben 12 ausübt-was bei der Auslegung des hydrostatischen Antriebs festgelegt wird - kann somit mit der erfindungsgemäßen Steuervorrichtung 10 für hydrostatische Antriebe 2 einfach und zuverlässig die Neutralstellung eingestellt werden, indem die Höhe des Eingangssignals, das auf den Aktuator 14 wirkt, so gewählt wird, dass der Aktuator 14 eine dem Vorspannelement 16 äquivalente Gegenkraft aufbaut. Sowohl in Betrieb des hydrostatischen Antriebs 2 in die eine oder in die andere Richtung durch reversierbaren Betrieb der Verstellpumpe 8 kann über die Vorgabe des Eingangssignals auf den Aktuator 14 eine konstante Antriebsleistung am hydrostatischen Motor 6 abgenommen werden. Hierzu muss das Eingangssignal auf den Aktuator 14 nur in geeigneter Weise vermindert bzw. erhöht werden, damit das Vorspannelement 16 bzw. die Summe der Kräfte aus Aktuator 14 und Betriebsdruck den Steuerkolben 12 aus seiner Neutralstellung in eine gewünschte (ausgelenkte) Stellung verstellt bzw. verstellen, in der er durch die an den Stirnseiten jeweils wirkenden Hydraulikkräften selbsttätig regelnd gehalten wird. Geeigneterweise wird man auch in der Rückführleitung 26 der Servodruckleitung 24 eine Düse 27 vorsehen, die den Druck aus der Servoleitung 24 mindert, damit der von der Speisepumpe erzeugte Steuerdruck nicht mit voller Kraft, überlagert mit der Kraft des Vorspannelements 26, der Verschiebung des Steuerkolbens 12 in Richtung der zweiten Seite im Steuerzylinder 11 entgegensteht.

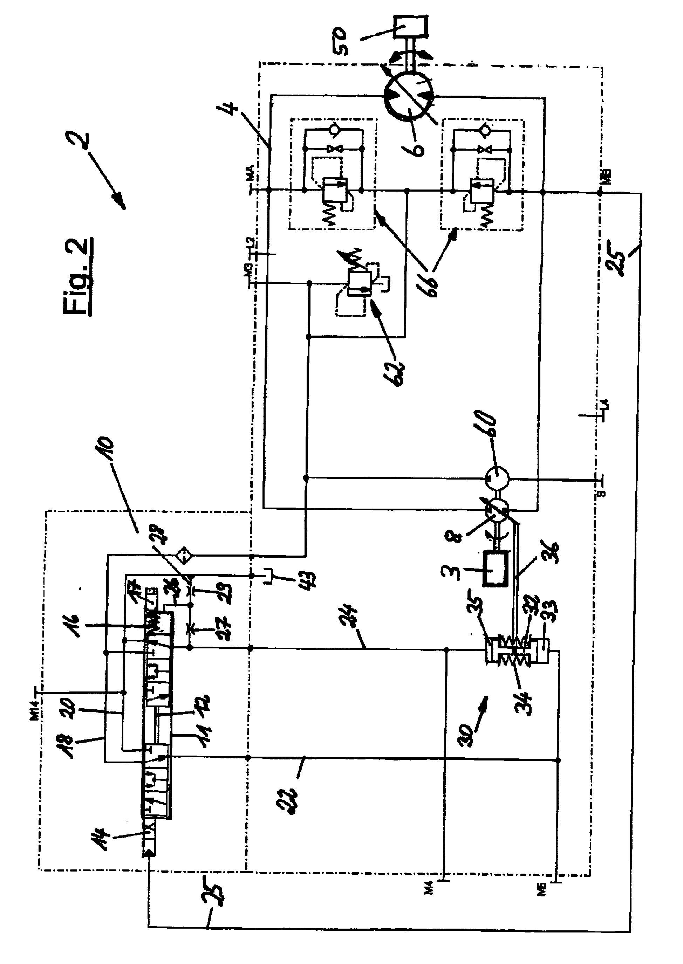

Figur 2 zeigt ein weiteres Ausführungsbeispiel einer erfindungsgemäßen Steuervorrichtung 10 für einen hydrostatischen Antrieb 2. Im Unterschied zum Ausführungsbeispiel gemäß Figur 1 wird der Betriebsdruck über die Rückführleitung 25 nicht direkt auf eine Stirnseite des Steuerkolbens 12 geleitet, sondern wirkt indirekt über eine Bohrung im Aktuator 14 auf den Steuerkolben 12. Hierzu ist bevorzugt am Aktuator 12 eine koaxiale Bohrung vorgesehen. Über die Rückführleitung 25 von der Hochdruckseite des geschlossenen Hydraulikkreislaufes 4 rückgeführte Betriebsdruck kann dabei auf ein in Längsrichtung der Steuerzylinderachse verschiebliches Aktuatorelement wirken oder durch den Aktuator 14 hindurch auf eine Stirnseite des Steuerkolbens 12 geleitet werden. Der weitere Aufbau des Ausführungsbeispiels gemäß Figur 2 entspricht dem des Ausführungsbeispiels gemäß Figur 1.

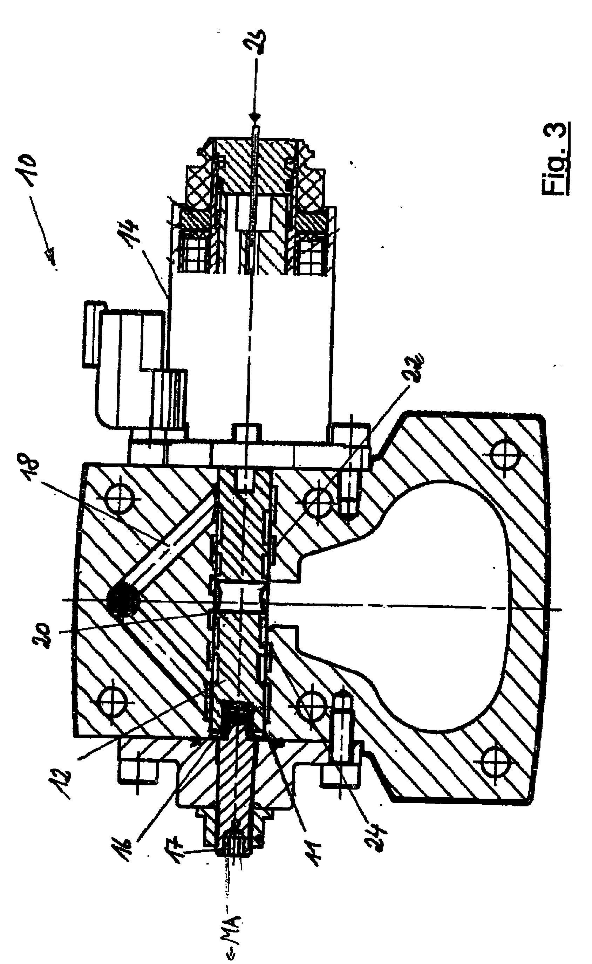

In Figur 3 ist eine Detailansicht der Steuervorrichtung 10 gezeigt, bei der ein Steuerkolben 12 in einer aus der Neutralstellung ausgelenkten Stellung im Steuerzylinder 11 angeordnet ist. Der Steuerkolben 12 wird hierbei über ein Vorspannelement 16, welches mittels einer Einstellvorrichtung 17 in seiner Vorspannkraft einstellbar ist, und über den aus der Rückführleitung 25 kommenden Betriebsdruck zusammen mit der Kraft, welche durch den Aktuator 14 erzeugt wird, in einer ausgelenkten Stellung gehalten. Wie aus Figur 3 ersichtlich, ist auf der in Figur 3 dargestellten rechten Seite die Zuführungsleitung 18 für Steuerflüssigkeit mit Steuerdruck mit der Servoleitung 22 verbunden, so dass in der Servoleitung 22 erhöhte Druckverhältnisse herrschen. Auf der in Figur 3 dargestellten linken Seite des Steuerkolbens ist die Servoleitung 24 mit der Ableitung 20 verbunden, so dass vom Servokolben aufgrund des erhöhten Drucks in der Servoleitung 22 verdrängte Steuerflüssigkeit über die Servoleitung 24 und die Ableitung 20 beispielsweise zu einem Tank 43 abgeleitet werden kann.

Die in Figur 3 verwendeten Bezugsziffern stimmen mit den in Figuren 1 und 2 verwendeten Bezugszeichen für gleiche Bauteile überein.

Bei gedanklicher Verschiebung des Steuerkolbens 12 in der Zeichenebene der Figur 3 nach links lässt sich erkennen, dass der Steuerkolben, bevor er an der linken Seite beispielsweise hydraulisch gehalten wird, zuerst in seine Neutralstellung verbracht wird, in der die Durchflüsse von der Zuleitung 18 zu den Servoleitungen 22 und 24 sowie die Ableitungen 20 von den Servoleitungen 24 und 22 in ihrer Querschnittsgröße ausgeglichen sind, wodurch auch die Drücke in den Servoleitungen 22 und 24 ausgeglichen sind. Der Servokolben 32 und die damit verstellbare Hydraulikpumpe 8 sind dann in einer Nullstellung. Bei einer weiteren Auslenkung des Steuerkolbens 12 auf die in Figur 3 dargestellte linke Seite im Steuerzylinder 11 wird die Servoleitung 24 zur Zuleitung 18 für Steuerflüssigkeit zur Servoverstelleinrichtung 30 und die Servoleitung 22 zur Ableitung 20 von Steuerflüssigkeit kommend von der Servoverstellung 30. Damit werden an der Servoverstellung die Druckverhältnisse im Vergleich zu der in Figur 3 dargestellten Betriebssituation bzw. Stellung des Steuerkolbens 12 vertauscht, wodurch der Servokolben in der Servoverstelleinrichtung 30 auf die andere Seite verschoben wird und so die Verstellpumpe 8 über das Verschwenkelement 36, beispielsweise eine Schrägscheibe, in ihrer Förderrichtung umgekehrt wird.

In seiner in Figur 3 dargestellten nach rechts verschobenen Stellung wird der Steuerkolben 12 durch das Vorspannelement 16 im Zusammenwirken mit dem Betriebsdruck, welcher über die Rückführungsleitung 25, die in dem in Figur 3 gezeigten Ausführungsbeispiel dem der Figur 2 entspricht, über den Aktuator 14 im Kräftegleichgewicht gehalten. Dabei übernimmt das Zusammenspiel der Kräfte aus dem Vorspannelement 16 und der Druckkraft aus dem Betriebsdruck die Regulierung bzw. die exakte Positionierung des Steuerkolbens 12 in seiner in Figur 3 gezeigten, nach rechts ausgelenkten Position. Die vom Aktuator 14 erzeugte Kraft bildet in diesem Fall den für die Selbstregulierung vorgebbaren Leistungswert.

Mit der erfindungsgemäßen Steuervorrichtung 10 für einen hydrostatischen Antrieb 2 wird somit eine von der Antriebsdrehzahl der Verstellpumpe 8 konstante hydraulische Leistung für den Hydraulikmotor 6 bereitgestellt und somit eine konstante mechanische Leistungsabgabe an einen Verbraucher 50 in selbsttätiger Regulierung erreicht. Der konstant zu haltende Leistungswert, welcher von dem hydrostatischen Antrieb an einen Verbraucher abgegeben werden soll, kann dabei über ein Eingangssignal, das eine Aktuatorkraft am Aktuator 14 bewirkt, voreingestellt werden.

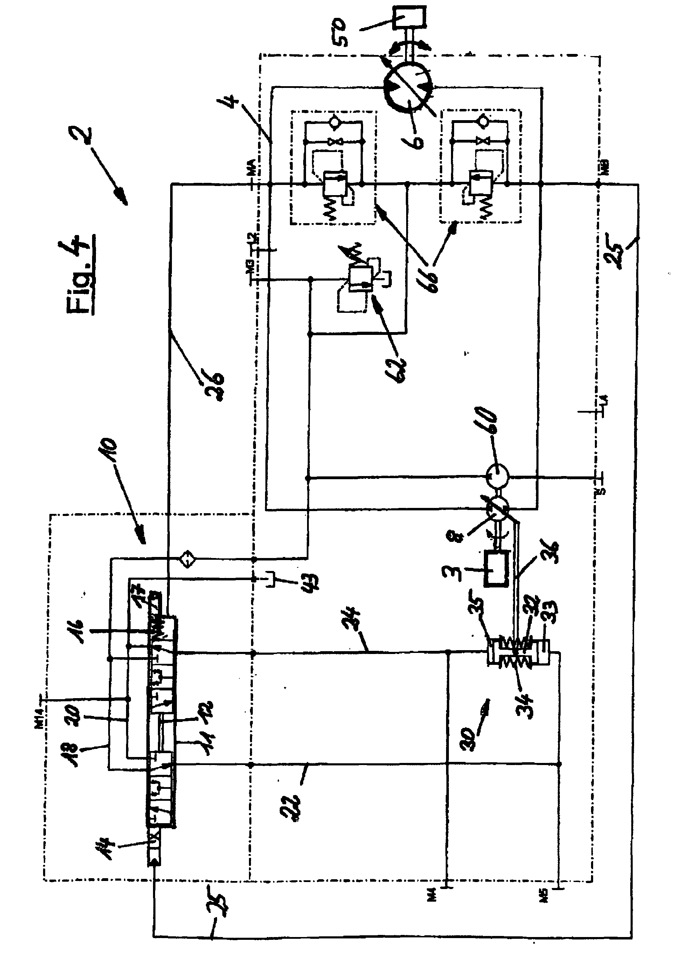

Eine solche Voreinstellung kann sowohl im reversierten als auch im nicht reversierten Betrieb des erfindungsgemäßen hydraulischen Antriebs mittels einer konstanten Kraft, aufgebracht durch den Aktuator 14 auf den Steuerkolben 12, erzielt werden. In einer weiteren bevorzugten Ausführungsform, die in Figur 4 dargestellt ist, ist hierfür die zweite Rückführleitung 26 mit der Verbindungleitung zwischen der Verstellpumpe 8 und dem Hydraulikmotor 6 verbunden, die im reversierten Betrieb die Hochdruckleitung bildet. Damit wird auch im reversierten Betrieb eine lastabhängige Verstellung der Hydraulikpumpe 8 erreicht, da der rückgeführte Hochdruck im reversierten Betrieb eine dem Aktuator 14 entgegengerichtete Kraft auf der Stirnseite des Steuerkolbens 12 erzeugt, auf die das Vorspannelement 16 ebenfalls wirkt. In diesem in Figur 4 dargestellten Ausführungsbeispiel ist eine Rückführung des Steuerdrucks auf die rechte Seite der Steuervorrichtung 10 nicht mehr notwendig, so wie dies in den Figuren 1 und 2 dargestellt ist. Der Niederdruck im nicht reversierten "Normalbetrieb" ist ausreichend für eine evtl. notwendige Dämpfung bei der Rückführung des Steuerkolbens 12 aus seiner in den Figuren 1, 2 und 4 dargestellten, nach links ausgelenkten Stellung in eine in Richtung Neutralstellung verringert ausgelenkte Stellung . Mit der erfindungsgemäßen Anbindung jeweils einer Seite der Steuervorrichtung 10 bzw. des Steuerkolbens 12 an jeweils eine Verbindungsleitung zwischen Verstellpumpe 8 und Hydraulikmotor 6 kann, je nach Betriebsart-reversierter oder nicht reversierter Normalbetrieb-der Hochdruck als regelnde Steuergröße für Konstanthaltung der am Hydraulikmotor 6 abnehmbaren Leistung effizient und selbsttätig wirkend eingesetzt werden.

Durch die jeweils lastabhängige Rückführung des Hochdrucks, entweder über die erste Rückführleitung 25 im nicht reversierten Normalbetrieb oder gemäß Figur 4 über die zweite Rückführleitung 26 im reversierten Betrieb, kann der Steuerkolben 12 jeweils in einer kraftausgeglichenen nach links oder rechts ausgelenkten Stellung durch den jeweils an einer Stirnseite des Steuerkolbens 12 anliegenden Hochdruck gehalten werden. Dabei regelt der Hochdruck in der ersten Rückführleitung 25 oder in der zweiten Rückführleitung 26 das Fördervolumen der Verstellpumpe 8 so, dass bei einer Drehzahlschwankung der Antriebsmaschine 3 und somit der Verstellpumpe 8 die hydraulische Leistung die der Hydraulikmotor 6 erhält, konstant bleibt. In einer Neutralstellung des Steuerkolbens 12 sind die beiden Rückführleitungen 25 und 26 druckfrei, da die Verstellpumpe 8 kein Hydraulikfluid fördert, weil auch der Servokolben 32 drucklos in der Nullstellung ist und so die Verschwenkeinrichtung 36 der Hydraulikpumpe 8 sich in Nullstellung befindet bzw. die Verstellpumpe 8 nicht ausgeschwenkt ist.

Weiterhin erfüllt die erfindungsgemäße Steuervorrichtung 10 die Forderungen an Notlaufeigenschaften zum Schutz vor Überlast des hydrostatischen Antriebs, wenn das elektrische System, welches unter anderem ursächlich für die Erzeugung der Aktuatorkraft ist, ausfällt. In diesem Fall wird der Steuerkolben 12 vom Vorspannelement 16 gegen den Betriebsdruck in eine in Figur 3 dargestellte nach rechts verschobene Stellung im Steuerzylinder 11 verbracht, wobei der Betriebsdruck den limitierenden Faktor für die Verschiebung des Steuerkolbens 12 durch das Vorspannelement 16 darstellt. Insgesamt wird mit der erfindungsgemäßen Steuervorrichtung 10 für hydrostatische Antriebe 2 eine einfache, aber robuste und zuverlässige, selbstregulierende Steuervorrichtung 10 bereitgestellt, die in ihrem Aufbau einfach und in ihrer Herstellung kostengünstig ist. Dabei kann auf aufwändige Sicherheitsvorrichtungen, wie beispielsweise Druckbegrenzungsventile bzw. Nullhubventile zur Begrenzung des Hochdrucks im geschlossenen Hydraulikkreis 4 vollständig verzichtet werden. Bei steigendem Betriebsdruck auf der Hochdruckseite des geschlossenen Hydraulikkreislaufes 4 wird das Fördervolumen der Verstellpumpe 8 zurückgenommen, indem die Ausschwenkung der Verstellpumpe 8 zurückgenommen wird.

### Bezugzeichenliste

- 2: hydrostatischer Antrieb
- 3: Verbrennungskraftmaschine
- 4: geschlossener Hydraulikkreislauf
- 6: Hydraulikmotor
- 8: Verstellpumpe
- 10: Steuervorrichtung
- 11: Steuerzylinder
- 12: Steuerkolben
- 14: Aktuator
- 16: Vorspannelement
- 17: Einstellvorrichtung für Vorspannelement
- 18: Zuleitung für Steuerflüssigkeit
- 20: Ableitung für Steuerflüssigkeit
- 22: erste Servoleitung
- 24: zweite Servoleitung
- 25: erste Rückführleitung für Betriebsdruck
- 26: zweite Rückführleitung für Betriebsdruck
- 27: Düse
- 28: Bypassleitung
- 29: Düse
- 30: Servoverstelleinheit
- 32: Servokolben
- 33: erste Seite der Servoverstelleinheit
- 34: elastisches Element
- 35: zweite Seite der Servoverstelleinheit
- 36: Verschwenkvorrichtung
- 43: Tank
- 50: Lüfter
- 60: Speisepumpe
- 62: Speisedruckbegrenzungsventil
- 66: Überdruckbegrenzungsventile

## Patentansprüche

1. Hydrostatischer Antrieb (2) mit einem geschlossenen Hydraulikflüssigkeitskreislauf (4), in dem ein Hydraulikmotor (6) und eine Verstellpumpe (8) angeordnet sind, mit einer Speisepumpe (60) für die Bereitstellung von Steuerflüssigkeit mit einem Steuerdruck, und mit einer Steuervorrichtung (10) für die gesteuerte Beaufschlagung einer zweiseitigen Servoverstelleinheit (30) der Verstellpumpe (8) mit Steuerdruck, wobei die Steuervorrichtung (10) aufweist:
- einen in einem zweiseitigen Steuerzylinder (11) geführten Steuerkolben (12) mit einer ersten Seite und einer zweiten Seite, der aus einer Neutralstellung in beide Richtungen entlang der Längsrichtung des Steuerzylinders (11) derart bewegbar ist, dass der Steuerkolben (12) auf einer Seite des Steuerzylinders (11) eine Zuleitung (18) für Steuerflüssigkeit mit Steuerdruck an eine Seite (33,35) der Servoverstelleinheit (30) und gleichzeitig auf der anderen Seite des Steuerzylinders (11) eine Ableitung (20) für Steuerflüssigkeit von der zweiten Seite (33,35) der Servoverstelleinheit (30) freigibt,
- einen am Steuerzylinder (11) angeordneten Aktuator (14), mittels welchem eine Kraft in Richtung einer Seite des Steuerzylinders (11) auf den Steuerkolben (12) ausübbar ist, sowie
- ein am Steuerkolben (12) angeordnetes Vorspannelement (16), das eine Kraft gegen die Wirkrichtung des Aktuators (14) auf den Steuerkolben (12) ausübt,
**dadurch gekennzeichnet,**
**dass** mittels einer ersten Rückführleitung (25) der von der Verstellpumpe (8) erzeugte Förderdruck auf die erste Seite des Steuerkolbens (12) derart rückführbar ist, dass eine Kraft in Wirkrichtung des Aktuators (14) auf den Steuerkolben (12) ausübbar ist, und dass der Steuerkolben (12) bei konstanter Kraft des Aktuators (14) durch das Vorspannelement (16) und den Förderdruck der Verstellpumpe (8) in einer kraftausgeglichenen Stellung im Steuerzylinder (11) gehalten wird, sodass der Hydraulikmotor (6) bei variabler Drehzahl der Verstellpumpe (8) auf eine abhängig von der Kraft des Aktuators (14) konstante hydraulische Leistung geregelt ist.

2. Hydrostatischer Antrieb nach Anspruch 1, bei dem der Steuerkolben (12) bei inaktivem Aktuator (14) in einer maximal auslenkbaren Stellung positionierbar ist.

3. Hydrostatischer Antrieb nach Anspruch 1 oder 2, bei dem die Vorspannkraft des Vorspannelementes (16) einstellbar ist.

4. Hydrostatischer Antrieb nach einem der Ansprüche 1 bis 3, bei dem der Steuerkolben (12) in der Neutralstellung ist, wenn der Betrag der Kraft des Aktuators (14) gleich groß ist wie der Betrag der Kraft des Vorspannelementes (16).

5. Hydrostatischer Antrieb nach einem der Ansprüche 1 bis 4, bei dem der Förderdruck der Verstellpumpe (8) über eine Bohrung in dem Aktuator (14) auf eine Stirnseite des Steuerkolbens (12) geleitet wird.

6. Hydrostatischer Antrieb nach einem der Ansprüche 1 bis 5, bei dem der Druck in der Servoleitung (22, 24) über eine zweite Rückführleitung (26) auf eine Seite des Steuerkolbens (12) derart rückgeführt ist, dass eine das Vorspannelement (16) unterstützende Kraft auf den Steuerkolben erzeugbar ist.

7. Hydrostatischer Antrieb nach Anspruch 6, bei dem in der zweiten Rückführleitung (26) eine Düse (27) angeordnet ist und die zweite Rückführleitung (26) mit einer Bypassleitung (28) mit einer darin angeordneten Düse (29) mit der Ableitung (20) der Steuerflüssigkeit verbunden ist.

8. Hydrostatischer Antrieb nach einem der Ansprüche 1 bis 7, bei dem der Aktuator (14) ein elektrisch ansteuerbarer Proportionalmagnet ist.

9. Hydrostatischer Antrieb nach einem der Ansprüche 1 bis 8, bei dem das Vorspannelement (16) eine Druckfeder ist.

10. Hydrostatischer Antrieb nach einem der Ansprüche 1 bis 9, bei dem die Verstellpumpe (8) reversierbar ist, und/oder der hydrostatische Antrieb einen verstellbaren und/oder reversierbaren Hydraulikmotor (6) für den Antrieb eines Verbrauchers (50) aufweist.

11. Hydrostatischer Antrieb nach einem der Ansprüche 1 bis 4, bei dem die Verstellpumpe (8) reversierbar ist und der im reversierten Betrieb von der Verstellpumpe (8) erzeugte Hochdruck über eine zweite Rückführleitung (26) auf die zweite Seite des Steuerkolbens (12) derart rückführbar ist, dass eine das Vorspannelement (16) unterstützende Kraft auf den Steuerkolben erzeugbar ist.

12. Hydrostatischer Antrieb nach Anspruch 10, **dadurch gekennzeichnet, dass** der Verbraucher (50) ein Lüfter ist.

## Claims

1. Hydrostatic drive (2) having a closed hydraulic liquid circuit (4), in which a hydraulic motor (6) and a variable displacement pump (8) are arranged, having a feed pump (60) for the provision of control liquid at a control pressure, and having a control apparatus (10) for loading a two-sided servo-adjusting unit (30) of the variable displacement pump (8) with control pressure in a controlled manner, the control apparatus (10) having:
- a control piston (12) which is guided in a double-sided control cylinder (11), has a first side and a second side, and can be moved from a neutral position in both directions along the longitudinal direction of the control cylinder (11) in such a way that the control piston (12) opens, on one side of the control cylinder (11), a feed line (18) for control liquid at control pressure to one side (33, 35) of the servo-adjusting unit (30) and at the same time opens, on the other side of the control cylinder (11), a discharge line (20) for control liquid from the second side (33, 35) of the servo-adjusting unit (30),
- an actuator (14) which is arranged on the control cylinder (11) and by means of which a force can be exerted on the control piston (12) in the direction of one side of the control cylinder (11), and
- a prestressing element (16) which is arranged on the control piston (12) and exerts a force on the control piston (12) counter to the direction of action of the actuator (14),
**characterized in that** the delivery pressure which is generated by the variable displacement pump (8) can be returned to the first side of the control piston (12) via a first return line (25) in such a way that a force in the direction of action of the actuator (14) can be exerted on the control piston (12), and **in that** the control piston (12) is held in a force-equalized position in the control cylinder (11) in the case of a constant force of the actuator (14) by way of the prestressing element (16) and the delivery pressure of the variable displacement pump (8), with the result that, in the case of a variable speed of the variable displacement pump (8), the hydraulic motor (6) is controlled to a hydraulic output which is constant depending on the force of the actuator (14).

2. Hydrostatic drive according to Claim 1, in which the control piston (12) can be positioned in a maximum deflectable position in the case of an inactive actuator (14).

3. Hydrostatic drive according to Claim 1 or 2, in which the prestressing force of the prestressing element (16) can be set.

4. Hydrostatic drive according to one of Claims 1 to 3, in which the control piston (12) is in the neutral position when the magnitude of the force of the actuator (14) is as great as the magnitude of the force of the prestressing element (16).

5. Hydrostatic drive according to one of Claims 1 to 4, in which the delivery pressure of the variable displacement pump (8) is guided via a bore in the actuator (14) to an end side of the control piston (12).

6. Hydrostatic drive according to one of Claims 1 to 5, in which the pressure in the servo-line (22, 24) is returned via a second return line (26) to a side of the control piston (12) in such a way that a force which assists the prestressing element (16) can be generated on the control piston.

7. Hydrostatic drive according to Claim 6, in which a nozzle (27) is arranged in the second return line (26), and the second return line (26) is connected by way of a bypass line (28) with a nozzle (29) arranged therein to the discharge line (20) of the control liquid.

8. Hydrostatic drive according to one of Claims 1 to 7, in which the actuator (14) is an electrically actuable proportional magnet.

9. Hydrostatic drive according to one of Claims 1 to 8, in which the prestressing element (16) is a compression spring.

10. Hydrostatic drive according to one of Claims 1 to 9, in which the variable displacement pump (8) is reversible, and/or the hydrostatic drive has an adjustable and/or reversible hydraulic motor (6) for driving a consumer (50).

11. Hydrostatic drive according to one of Claims 1 to 4, in which the variable displacement pump (8) is reversible, and the high pressure which is generated by the variable displacement pump (8) in reversed operation can be returned via a second return line (26) to the second side of the control piston (12) in such a way that a force which assists the prestressing element (16) can be generated on the control piston.

12. Hydrostatic drive according to Claim 10, **characterized in that** the consumer (50) is a fan.

## Revendications

1. Entraînement hydrostatique (2) comprenant un circuit de liquide hydraulique fermé (4) dans lequel sont disposés un moteur hydraulique (6) et une pompe de réglage (8), comprenant une pompe d'alimentation (60) pour fournir du liquide de commande à une pression de commande, et comprenant un dispositif de commande (10) pour solliciter de manière commandée une unité de réglage servocommandée bilatérale (30) de la pompe de réglage (8) avec une pression de commande, le dispositif de commande (10) présentant :
- un piston de commande (12) guidé dans un cylindre de commande bilatéral (11) avec un premier côté et un deuxième côté, qui peut être déplacé d'une position neutre dans les deux sens le long de la direction longitudinale du cylindre de commande (11) de telle sorte que le piston de commande (12) d'un côté du cylindre de commande (11) libère une conduite d'amenée (18) pour du liquide de commande à la pression de commande au niveau d'un côté (33, 35) de l'unité de réglage servocommandée (30) et libère simultanément une conduite de sortie (20) pour du liquide de commande de l'autre côté du cylindre de commande (11) depuis le deuxième côté (33, 35) de l'unité de réglage servocommandée (30),
- un actionneur (14) disposé au niveau du cylindre de commande (11), au moyen duquel une force peut être exercée sur le piston de commande (12) dans la direction d'un côté du cylindre de commande (11), et
- un élément de précontrainte (16) disposé au niveau du piston de commande (12), lequel exerce une force sur le piston de commande (12) à l'encontre du sens d'action de l'actionneur (14),
**caractérisé en ce que**
la pression de refoulement générée par la pompe de réglage (8) sur le premier côté du piston de commande (12) peut être recyclée au moyen d'une première conduite de recyclage (25) de telle sorte qu'une force puisse être exercée dans le sens d'action de l'actionneur (14) sur le piston de commande (12), et **en ce que** le piston de commande (12), lorsque la force de l'actionneur (14) est constante, est maintenu dans le cylindre de commande (11) dans une position équilibrée en force par l'élément de précontrainte (16) et la pression de refoulement de la pompe de réglage (8), de telle sorte que le moteur hydraulique (6), en cas de vitesse de rotation variable de la pompe de réglage (8), soit réglé à une puissance hydraulique constante dépendant de la force de l'actionneur (14).

2. Entraînement hydrostatique selon la revendication 1, dans lequel le piston de commande (12), lorsque l'actionneur est inactif (14), peut être positionné dans une position pouvant être déviée au maximum.

3. Entraînement hydrostatique selon la revendication 1 ou 2, dans lequel la force de précontrainte de l'élément de précontrainte (16) peut être ajustée.

4. Entraînement hydrostatique selon l'une quelconque des revendications 1 à 3, dans lequel le piston de commande (12) est dans la position neutre lorsque la valeur absolue de la force de l'actionneur (14) est aussi grande que la valeur absolue de la force de l'élément de précontrainte (16).

5. Entraînement hydrostatique selon l'une quelconque des revendications 1 à 4, dans lequel la pression de refoulement de la pompe de réglage (8) est guidée par le biais d'un alésage dans l'actionneur (14) sur un côté frontal du piston de commande (12).

6. Entraînement hydrostatique selon l'une quelconque des revendications 1 à 5, dans lequel la pression dans la conduite servocommandée (22, 24) est recyclée par le biais d'une deuxième conduite de recyclage (26) d'un côté du piston de commande (12) de telle sorte qu'une force supportant l'élément de précontrainte (16) puisse être générée sur le piston de commande.

7. Entraînement hydrostatique selon la revendication 6, dans lequel une buse (27) est disposée dans la deuxième conduite de recyclage (26) et la deuxième conduite de recyclage (26) est connectée, par une conduite de dérivation (28) dans laquelle est disposée une buse (29), à la conduite de sortie (20) du liquide de commande.

8. Entraînement hydrostatique selon l'une quelconque des revendications 1 à 7, dans lequel l'actionneur (14) est un aimant proportionnel pouvant être commandé électriquement.

9. Entraînement hydrostatique selon l'une quelconque des revendications 1 à 8, dans lequel l'élément de précontrainte (16) est un ressort de compression.

10. Entraînement hydrostatique selon l'une quelconque des revendications 1 à 9, dans lequel la pompe de réglage (8) est réversible, et/ou l'entraînement hydrostatique présente un moteur hydraulique réglable et/ou réversible (6) pour l'entraînement d'un consommateur (50).

11. Entraînement hydrostatique selon l'une quelconque des revendications 1 à 4, dans lequel la pompe de réglage (8) est réversible et la pression élevée générée dans le mode inversé par la pompe de réglage (8) peut être recyclée par le biais d'une deuxième conduite de recyclage (26) du deuxième côté du piston de commande (12) de telle sorte qu'une force supportant l'élément de précontrainte (16) puisse être générée sur le piston de commande.

12. Entraînement hydrostatique selon la revendication 10, **caractérisé en ce que** le consommateur (50) est un ventilateur.
